# EUROPEAN PATENT APPLICATION

(11) **EP 4 545 788 A1**
(43) Date of publication of application: **30.04.2025**
(21) Application number: 22948993.5
(22) Date of filing: 30.09.2022
(51) Int. Cl.: F03D 80/30

(54) **LIGHTNING PROTECTION DEVICE, LIGHTNING PROTECTION SYSTEM, WIND TURBINE AND METHOD**

(30) Priority: 29.06.2022 CN 202210753573
(71) Applicant: Jiangsu Goldwind Science & Technology Co., Ltd., Yancheng, Jiangsu 224100 (CN)
(72) Inventor: FU, Lei, Yancheng, Jiangsu 224100 (CN); WEN, Birong, Yancheng, Jiangsu 224100 (CN); LI, Quanzhou, Yancheng, Jiangsu 224100 (CN)
(74) Representative: Gulde & Partner
(86) International application number: PCT/CN2022/123640
(87) International publication number: WO 2024/000907

(57) **Abstract**

The present disclosure relates to a lightning protection device, a lightning protection system, a wind power generator set, and a method. The lightning protection device includes a transition conductor with a predetermined length, width and thickness, the transition conductor comprising a first connecting end and a second connecting end opposite to each other in its length direction, the first connecting end being used for receiving lightning current, and the second connecting end being used for connection with a down lead system. The transition conductor includes a thinned area and an edge area, the edge area surrounds at least a portion of the thinned area, one side of the edge area and one side of the thinned area in the length direction are connected and jointly form the first connecting end, and a thickness of the thinned area is less than that of the edge area. The lightning protection device, the lightning protection system, the wind power generator set, and the method of the present disclosure can adapt to a skin effect of current and improve overall safety performance.

## Description

### CROSS REFERENCE TO RELATED APPLICATIONS

The present disclosure claims priority to Chinese Patent Application No. 202210753573.6, filed on June 29, 2022 and entitled "LIGHTNING PROTECTION DEVICE, LIGHTNING PROTECTION SYSTEM, WIND POWER GENERATOR SET, AND METHOD", which is incorporated herein by reference in its entirety.

### TECHNICAL FIELD

The present disclosure relates to the field of wind power technologies, and in particular, to a lightning protection device, a lightning protection system, a wind power generator set, and a method.

### BACKGROUND

After blades in a wind power generator set intercept lightning through a metal mesh, lightning current needs to be conducted to a down lead system and ultimately to the earth through the down lead system.

The metal mesh is of a relatively thin layered planar structure, so when current is conducted in a plane, a skin effect will occur, that is, the current is accustomed to being conducted along edges of the plane, and the current intensity in the middle of the plane is relatively low.

Considering the skin effect of the current, the current is more likely to concentrate on two sides in a width direction during actual conduction, resulting in excessive local current and easy damage to the metal mesh at the edges.

### SUMMARY

Embodiments of the present disclosure provide a lightning protection device, a lightning protection system, a wind power generator set, and a method. By adjusting a thickness in a width direction of the lightning protection device, current carrying capacity at an edge can be improved, and damage to the lightning protection device by excessive concentration of current at the edge can be avoided.

In an aspect, embodiments of the present disclosure provide a lightning protection device, including a transition conductor with a predetermined length, width and thickness, the transition conductor including a first connecting end and a second connecting end opposite to each other in its length direction, the first connecting end being used for receiving lightning current, and the second connecting end being used for connection with a down lead system, wherein the transition conductor includes a thinned area and an edge area, the edge area surrounds at least a portion of the thinned area, one side of the edge area and one side of the thinned area in the length direction are connected and jointly form the first connecting end, and a thickness of the thinned area is less than that of the edge area.

According to an aspect of the embodiments of the present disclosure, the sides of the thinned area and the edge area in the length direction that form the first connecting end are aligned in a width direction.

According to an aspect of the embodiments of the present disclosure, the transition conductor has a first edge and a second edge opposite to each other in its width direction, the first edge and the second edge are located in the edge area, one end of the first edge and one end of the second edge in the length direction are scattered away from each other and connected to the first connecting end respectively, and the other ends of the first edge and the second edge converge towards each other and are connected to the second connecting end respectively.

According to an aspect of the embodiments of the present disclosure, the thickness of the edge area increases in the length direction from the first connecting end to the second connecting end.

According to an aspect of the embodiments of the present disclosure, the edge area includes a plurality of conductive segments sequentially disposed in the length direction, and the thicknesses of the plurality of conductive segments increase segment by segment in an extension direction from the first connecting end to the second connecting end.

According to an aspect of the embodiments of the present disclosure, the edge area includes edge portions in pairs, the edge portions in pairs are oppositely disposed on two sides of the thinned area in the width direction of the transition conductor, and the thickness of each edge portion is greater than that of the thinned area.

According to an aspect of the embodiments of the present disclosure, the edge portions on the two sides of the thinned area are symmetrically disposed in the width direction.

According to an aspect of the embodiments of the present disclosure, in a thickness direction of the transition conductor, orthogonal projections of the thinned area and the edge portions are all triangular;
or in a thickness direction of the transition conductor, orthogonal projections of the thinned area and the edge portions are all rectangular.

According to an aspect of the embodiments of the present disclosure, the lightning protection device further includes a base conductor, and the base conductor is connected to the first connecting end.

According to an aspect of the embodiments of the present disclosure, the base conductor has a plurality of meshes having a same size.

According to an aspect of the embodiments of the present disclosure, the lightning protection device further includes an adapter disposed at the second connecting end, the adapter is entirely of a solid plate-like structure, and the adapter is provided with a through hole and connected to the down lead system through the through hole.

According to an aspect of the embodiments of the present disclosure, the lightning protection device further includes a current collector disposed in the through hole, and the adapter is connected to the down lead system through the current collector.

In another aspect, embodiments of the present disclosure provide a lightning protection system, including any of above-mentioned lightning protection devices and a down lead system, the down lead system being directly or indirectly connected to the transition conductor.

In still another aspect, embodiments of the present disclosure provide a wind power generator set, including blades, each blade having a shell, the wind power generator set further including the lightning protection system as described above, wherein the lightning protection device covers at least a portion of the shell and is connected to the shell.

In still another aspect, embodiments of the present disclosure provide a forming method for a lightning protection device, including:
providing a conductor with a predetermined length, width and thickness; and
thickening edges of the conductor to increase thicknesses of some areas of the conductor in its width direction, so as to form a transition conductor,
wherein the transition conductor includes a thinned area and an edge area, the edge area surrounds at least a portion of the thinned area, one side of the edge area and one side of the thinned area in a length direction of the transition conductor are connected and jointly form a first connecting end, a side, opposite to the first connecting end, of the transition conductor in the length direction forms a second connecting end, and a thickness of the thinned area is less than that of the edge area.

According to an aspect of the embodiments of the present disclosure, the step of thickening edges of the conductor to form a transition conductor includes:
laminating a connecting layer on one side of the conductor in a thickness direction;
laminating a thickening conductive layer on a side, away from the conductor, of the connecting layer in the thickness direction of the conductor, an orthographic projection of the thickening conductive layer on the conductor covering the edges on two sides of the conductor in the width direction; and
heating the connecting layer to a molten state, followed by cooling and solidifying, so that the thickening conductive layer is connected with the conductor to form the transition conductor, wherein the thickening conductive layer and an area, covered by the thickening conductive layer, of the conductor form the edge area, and an area, not covered by the thickening conductive layer, of the conductor forms the thinned area.

According to an aspect of the embodiments of the present disclosure, the step of thickening edges of the conductor to form a transition conductor includes:
dividing the conductor into a base area, a first folding area and a second folding area, the base area having a division line in the width direction, and the first folding area and the second folding area being oppositely disposed on two sides of the division line; and
bending the first folding area and the second folding area relative to the base area and laminating them in the thickness direction of the conductor to cover a portion of the base area, so as to form the transition conductor, wherein a portion, laminated with the base area, of each of the first folding area and the second folding area forms the edge area, and a portion, not laminated with the first folding area and the second folding area, of the base area forms the thinned area.

According to an aspect of the embodiments of the present disclosure, the step of bending the first folding area and the second folding area relative to the base area and laminating them in the thickness direction to cover a portion of the base area, so as to form the transition conductor includes:
bending the first folding area relative to the base area at least once;
cutting off a portion of the first folding area that exceeds the division line in the width direction after bending relative to the base area;
bending the second folding area relative to the base area at least once; and
cutting off a portion of the second folding area that exceeds the division line in the width direction after bending relative to the base area.

According to an aspect of the embodiments of the present disclosure, it further includes:
providing a base conductor with a plurality of meshes;
connecting the base conductor to the first connecting end of the transition conductor;
   and/or
further includes:
   providing an adapter, wherein the adapter is entirely of a solid plate-like structure and has a through hole; and
   connecting the adapter to the second connecting end of the transition conductor.

According to the lightning protection device, the lightning protection system, the wind power generator set, and the method provided by the embodiments of the present disclosure, the transition conductor is disposed in the lightning protection device, the first connecting end of the transition conductor is used for receiving lightning current, the second connecting end is used for connection with the down lead system, the transition conductor is divided into a thinned area and an edge area, and one side of the edge area and one side of the thinned area in the length direction are connected and jointly form the first connecting end, so when lightning current enters from the first connecting end, the lightning current will flow through the thinned area and the edge area to the second connecting end; and the thickness of the thinned area is less than that of the edge area, thereby improving current carrying capacity at edges of the lightning protection device, adapting to the distribution law of current during transmission along a plane, avoiding damage to the lightning protection device by excessive concentration of the current at the edges, and improving overall safety performance.

### DESCRIPTION OF THE DRAWINGS

Features, advantages, and technical effects of exemplary embodiments of the present disclosure will be described below with reference to the accompanying drawings.
FIG. 1 is a schematic structural diagram of a lightning protection device according to embodiments of the present disclosure;
FIG. 2 is a schematic structural diagram of another lightning protection device according to embodiments of the present disclosure;
FIG. 3 is a schematic structural diagram of another lightning protection device according to embodiments of the present disclosure;
FIG. 4 is a schematic structural diagram of another lightning protection device according to embodiments of the present disclosure;
FIG. 5 is a schematic structural diagram of another lightning protection device according to embodiments of the present disclosure;
FIG. 6 is a schematic structural diagram of another lightning protection device according to embodiments of the present disclosure;
FIG. 7 is a schematic structural diagram of a current collector according to embodiments of the present disclosure;
FIG. 8 is a cross-sectional view of a lightning protection system mating a blade according to embodiments of the present disclosure;
FIG. 9 is a process diagram of a forming method for a lightning protection device according to embodiments of the present disclosure;
FIG. 10 is a process diagram of a forming method for another lightning protection device according to embodiments of the present disclosure;
FIG. 11 is a process diagram of a forming method for another lightning protection device according to embodiments of the present disclosure;
FIG. 12 is a process diagram of a forming method for another lightning protection device according to embodiments of the present disclosure;
FIG. 13 is a process and structural diagram of a forming method for a lightning protection device according to embodiments of the present disclosure;
FIG. 14 is a schematic diagram of a forming structure for another lightning protection device according to embodiments of the present disclosure;
FIG. 15 is a process diagram of a forming method for another lightning protection device according to embodiments of the present disclosure;
FIG. 16 is a process diagram of a forming method for another lightning protection device according to embodiments of the present disclosure.

### Reference numerals:

100 - lightning protection device; X - length direction; Y - width direction; 200-down lead system; 300 - lightning protection system;
10 - transition conductor; 11 - thinned area; 12 - edge area; 13 - edge portion;
20 - base conductor; 30 - adapter; 31 - through hole; 40 - blade;
1 - first connecting end; 2 - second connecting end; 3 - first edge; 4 - second edge;
5 - conductive segment; 6 - current collector; 7 - metal connecting structure; 8 - accessory connector; 9 - down lead
1a - first folding area; 1b - second folding area; 1c - base area; mm - division line.

In the drawings, the same reference numerals are used for the same components. The drawings are not drawn to actual scale.

### DETAILED DESCRIPTION

The features and exemplary embodiments of various aspects of the present disclosure will be described in detail below. In the following detailed description, many specific details are proposed in order to provide a comprehensive understanding of the present disclosure. However, it is obvious to those skilled in the art that the present disclosure may be implemented without some of these specific details. The following description of the embodiments is only to provide a better understanding of the present disclosure by showing examples of the present disclosure. In the drawings and the following description, at least part of the well-known structures and technologies are not shown in order to avoid unnecessary blurring of the present disclosure; and, for clarity, the sizes of some structures may be exaggerated. Furthermore, the features, structures or characteristics described hereinafter may be combined in any suitable manner in one or more embodiments.

The directional terms appearing in the following description are all directions shown in the drawings, and do not limit a lightning protection device, a lightning protection system, a wind power generator set, and a method of the present disclosure. In the description of the present disclosure, it should also be noted that, unless otherwise clearly specified and defined, the terms "mounted" and "connected" should be generally understood, for example, the "connected" may be fixedly connected, detachably connected, integrally connected, directly connected, or indirectly connected. Those of ordinary skill in the art could understand the specific meanings of the above terms in the present disclosure according to specific circumstances.

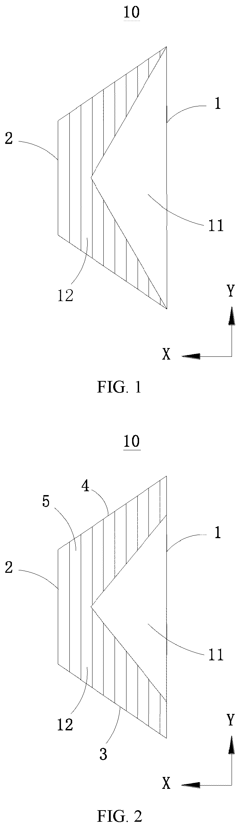

In order to better understand the present disclosure, the lightning protection device, the lightning protection system, the wind power generator set, and the method of the embodiments of the present disclosure are described in detail below with reference to FIGs. 1 to 16.

With reference to FIG. 1, a lightning protection device 100 provided by embodiments of the present disclosure includes a transition conductor 10, the transition conductor 10 with a predetermined length, width and thickness, the transition conductor 10 having a first connecting end 1 and a second connecting end 2 opposite to each other in its length direction X, the first connecting end 1 being used for receiving lightning current, and the second connecting end 2 being used for connection with a down lead system 200, wherein the transition conductor 10 includes a thinned area 11 and an edge area 12, the edge area 12 surrounds at least a portion of the thinned area 11, one side of the edge area 12 and one side of the thinned area 11 in the length direction X are connected and jointly form the first connecting end 1, and a thickness of the thinned area 11 is less than that of the edge area 12.

Because a skin effect occurs in a current transmission process, current is transmitted along edges of two sides of a plane, resulting in a relatively high current intensity and relatively concentrated current on the two sides of the plane. Therefore, the transition conductor 10 has the edge area 12 and the thinned area 11, and the thickness of the edge area 12 is greater than that of the thinned area 11, so as to improve current carrying capacity of the edge area 12.

Considering thickening at the edges on two sides of the entire structure, thus the thicker edge area 12 needs to surround at least a portion of the thinned area 11, so that the thinned area 11 is disposed as close to the middle as possible.

The edge area 12 may be thickened by laminated pressure welding or folding. The present disclosure does not limit a specific thickening method for the edge area 12.

Optionally, the first connecting end 1 of the transition conductor 10 is used for receiving lightning and can be attached to a metal mesh to increase coverage on a blade 40, and the second connecting end 2 is used for connection with the down lead system 200 directly or indirectly through a metal body.

Optionally, the transition conductor 10 may be of a mesh structure or a solid plate-like structure, and is usually made of a metal, wherein a density of meshes in the mesh structure determines current conductivity.

The lightning protection device 100 according to the embodiments of the present disclosure is provided with the transition conductor 10, the first connecting end 1 of the transition conductor 10 is used for receiving lightning current, the second connecting end 2 is used for connection with the down lead system 200, the edge area 12 near sides is thicker than the thinned area 11 near a middle area, and one side of the edge area 12 and one side of the thinned area 11 in the length direction X are connected and jointly form the first connecting end 1, so when lightning current enters from the first connecting end 1, the lightning current will flow through the thinned area 11 and the edge area 12 to the second connecting end 2; the thickness of the thinned area 11 is less than that of the edge area 12, thereby improving current carrying capacity at the edges of the transition conductor 10 and adapting to the skin effect of current transmission; and the overall structural layout is conducive to the transmission of current, avoids a risk of damage caused by excessive local current intensity on the sides, and improves overall safety performance of the lightning protection device 100.

As some optional embodiments, with reference to FIG. 1 and FIG. 2, the sides of the thinned area 11 and the edge area 12 in the length direction X that form the first connecting end 1 are aligned in a width direction Y.

According to the lightning protection device 100 in the embodiments of the present disclosure, one side of the thinned area 11 and one side of the edge area 12 are aligned and form the first connecting end 1, which satisfies uniformity of receiving and transmitting lightning, so that lightning is regularly transmitted to the edge area 12 at the first connecting end 1. The structural layout of this embodiments can well adapt to the distribution law of current.

As some optional embodiments, with reference to FIG. 2, the transition conductor 10 has a first edge 3 and a second edge 4 opposite to each other in its width direction Y, the first edge 3 and the second edge 4 are located in the edge area 12, one end of the first edge 3 and one end of the second edge 4 in the length direction X are scattered away from each other and connected to the first connecting end 1 respectively, and the other ends of the first edge 3 and the second edge 4 converge towards each other and are connected to the second connecting end 2 respectively.

Considering that current is transmitted from a wider cross section to a narrower cross section, thus the length of the first connecting end 1 is greater than that of the second connecting end 2, so the first edge 3 and the second edge 4 extend from the first connecting end 1 to the second connecting end 2 and are close to each other in line with the transmission direction of current convergence.

Optionally, projections of the first connecting end 1 and the second connecting end 2 in a thickness direction are linear, and the entire transition conductor 10 is enclosed by the first edge 3, the second edge 4, the first connecting end 1 and the second connecting end 2 to form a trapezoidal structure.

The first edge 3 and the second edge 4 are two waists of the trapezoid. When extension lengths of the first edge 3 and the second edge 4 are equal, the entire structure forms an isosceles trapezoid.

According to the lightning protection device 100 in the embodiments of the present disclosure, the first edge 3 and the second edge 4 extend close to each other in line with the convergence direction of current transmission, which improves current convergence capability and is more conducive to centralized collection of current.

As some optional embodiments, with reference to FIG. 2, the thickness of the edge area 12 increases in the length direction X from the first connecting end 1 to the second connecting end 2.

Because current is mainly transmitted in the edge area 12 and a carrier transitions from a thinner end face to a thicker end face during transmission from the first connecting end 1 to the second connecting end 2, the thickness can be gradually changed in the edge area 12 to form a transition.

In this case, the thickness of the edge area 12 is not only greater than that of the thinned area 11, but also shows an increasing trend. Optionally, the increase in the thickness may be continuous or segment by segment.

According to the lightning protection device 100 in the embodiments of the present disclosure, the thickness of the edge area 12 gradually increases, which adapts to the skin effect of current; and the thickness of the carrier is also adaptively changed during current transmission, thereby avoiding damage to the connection by sudden change concentration of current and further improving the safety performance of the lightning protection device 100.

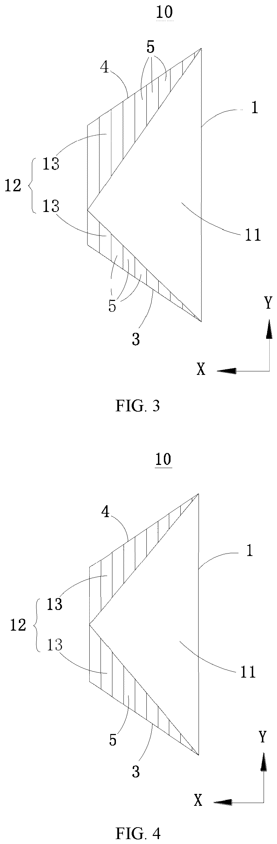

As some optional embodiments, with reference to FIG. 3, the edge area 12 includes a plurality of conductive segments 5 sequentially disposed in the length direction X, and the thicknesses of the plurality of conductive segments 5 increase segment by segment in an extension direction from the first connecting end 1 to the second connecting end 2.

Specifically, the increase in the thickness of the edge area 12 is achieved by means of the conductive segments 5 having increasing thicknesses, the number of layers in each conductive segment 5 increases from the first connecting end 1 to the second connecting end 2, and optionally, the thickness can be increased by a process of laminated pressure welding or the like.

According to the lightning protection device 100 in the embodiments of the present disclosure, a method of increasing the thickness of the edge area 12 is provided. By increasing the thickness of the edge area 12, a sudden change in the thickness of the cross section of the carrier during current transmission is avoided, the current intensity is buffered, current concentration is avoided, and safety is improved.

As some optional embodiments, with reference to FIG. 3 and FIG. 4, the edge region 12 includes edge portions 13 in pairs, the edge portions 13 in pairs are oppositely disposed on two sides of the thinned area 11 in the width direction Y of the transition conductor 10, and the thickness of each edge portion 13 is greater than that of the thinned area 11.

When an orthogonal projection of the thinned area 11 in the thickness direction is tangent to the second connecting end 2 at a point, the thinned area 11 divides the edge area 12 into two portions, which are the edge portions 13 in pairs and located on the two sides of the thinned area 11.

An outer contour of the thinned area 11 determines contours of the edge portions 13 in pairs on the two sides. Optionally, the edge portions 13 in pairs may be of equal size and symmetrically distributed, and their sizes may alternatively be unequal. The contours of the edge portions 13 may be regular or irregular.

Optionally, the thicknesses of the edge portions 13 in pairs may be equal or unequal, as long as the thickness of each edge portion 13 is greater than that of the thinned area 11.

According to the lightning protection device 100 in the embodiments of the present disclosure, a distribution layout of the thinned area 11 and the edge area 12 is provided, wherein the thinned area 11 divides the edge area 12 into edge portions 13 in pairs, so that the thinned area 11 obtains a maximum extension length in the length direction X, the thinned area 11 is formed within a maximum range in the length direction X, the extension range of the edge portions 13 in the length direction X increases, and protection capability on the edges is improved.

As some optional embodiments, with reference to FIG. 4, the edge portions 13 on the two sides of the thinned area 11 are symmetrically disposed in the width direction Y.

According to the lightning protection device 100 in the embodiments of the present disclosure, the edge portions 13 on the two sides of the thinned area 11 are symmetrically disposed in the width direction Y to achieve equal size of the edge portions 13 in pairs, so that the current is distributed more uniformly during transmission, a risk of unilateral damage caused by excessive concentration of the current on a single side is avoided, and the safety is improved.

As some optional embodiments, with continued reference to FIG. 4, in the thickness direction of the transition conductor 10, orthographic projections of the thinned area 11 and the edge portions 13 are all triangular; or in the thickness direction of the transition conductor 10, orthographic projections of the thinned area 11 and the edge portions 13 are all rectangular.

In this embodiment, the orthogonal projections of the thinned area 11 and the edge portions 13 are triangular as an example for illustration. When the thinned area 11 is a triangular area, its vertex angle is tangent to the second connecting end 2 at a point. Because the overall contour of the transition conductor 10 is trapezoidal, the triangular thinned area 11 divides the edge area 12 into another two triangular edge portions 13.

When the triangular thinned area 11 is an isosceles triangle, the two triangular edge portions 13 are symmetrically distributed about the thinned area 11 as a center. Of course, the triangular thinned area 11 may be a triangle with any side lengths, as long as its vertex angle is tangent to the second connecting end 2 to form triangular edge portions 13 in pairs.

On the premise that the edge area 12 surrounds at least a portion of the thinned area 11, the thinned area 11 and the edge area 12 may be divided in various forms. Optionally, the contour of the thinned area 11 may be triangular, rectangular, semicircular, or the like, and the edge area 12 may be in a corresponding shape. The present disclosure does not limit the shapes of the contours of the thinned area 11 and the edge area 12.

According to the lightning protection device 100 in the embodiments of the present disclosure, the contours of the thinned area 11 and the edge area 12 may be in various shapes, and may be selected according to actual needs and processes, thereby improving diversity and flexibility of the lightning protection device 100 and adapting to applications under various working conditions.

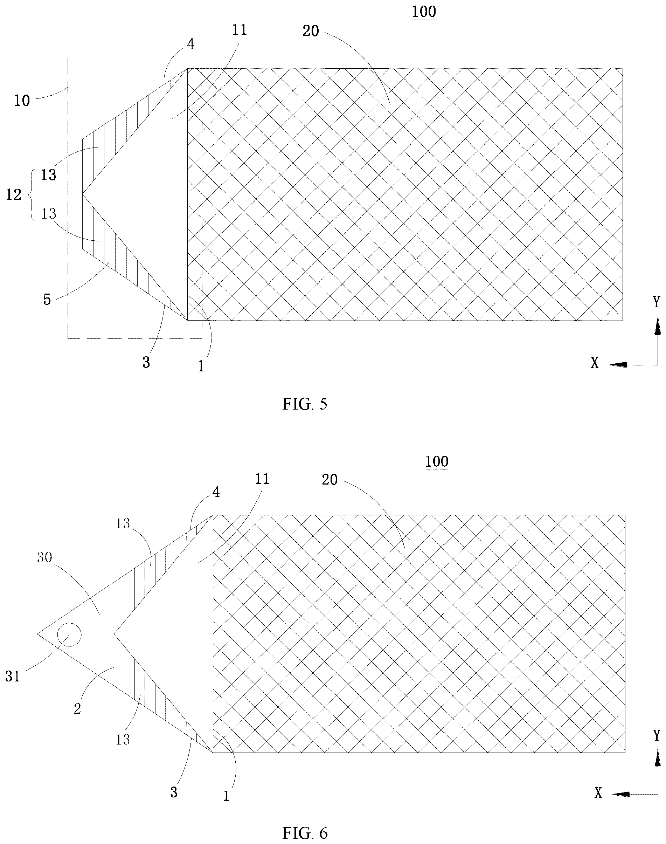

As some optional embodiments, with reference to FIG. 5, the lightning protection device 100 further includes a base conductor 20, and the base conductor 20 is connected to the first connecting end 1.

Optionally, the base conductor 20 has a plurality of meshes having the same size, with uniform conductivity. The sizes of the plurality of meshes may alternatively be different, for example, a metal mesh structure with gradient meshes may be used.

The present disclosure does not limit the extension length and coverage area of the base conductor 20, which may be selected according to the actual size of a blade 40.

Optionally, the thickness of the base conductor 20 is equal to that of the first connecting end 1, so that the base conductor 20 can be connected to the first connecting end 1.

According to the lightning protection device 100 in the embodiments of the present disclosure, the base conductor 20 can improve the lightning receiving capability of the lightning protection device 100, cover and protect the blade 40 within a maximum area, prevent the entire blade 40 from being damaged by lightning, and improve the overall safety performance.

As some optional embodiments, with reference to FIG. 6, the lightning protection device 100 further includes an adapter 30 disposed at the second connecting end 2, the adapter 30 is entirely of a solid plate-like structure, and the adapter 30 is provided with a through hole 31 and connected to the down lead system 200 through the through hole 31.

For the adapter 30, optionally, its thickness can remain unchanged, so that the overall current conductivity is the same and greater than the current conductivity of the second connecting end 2. Alternatively, the thickness of the adapter 30 increases to have a gradually changed thickness and gradually increases the current conductivity.

Optionally, in the length direction X of the transition conductor and from the first connecting end 1 to the second connecting end 2, a width direction of the adapter 30 shows a decreasing trend to buffer the lightning transmission process.

Optionally, the thickness of the adapter 30 is equal to that of the second connecting end 2 to connect the adapter 30 to the second connecting end 2. The adapter 30 is entirely of a solid plate-like structure, which may be a metal plate structure. Alternatively, the adapter 30 may be of a metal mesh structure with meshes.

Optionally, the through hole 31 is disposed in the adapter 30, and a wire in the down lead system 200 is directly connected to the through hole 31, so as to transmit the current in the transition conductor 10 to the down lead system 200, wherein the cross-sectional size of the lead matches the diameter of the through hole 31.

According to the lightning protection device 100 in the embodiments of the present disclosure, the adapter 30 is connected to the second connecting end 2 and provided with the through hole 31 to connect the lightning protection device 100 with the down lead system 200, so as to guide current to the down lead system 200 and export the current.

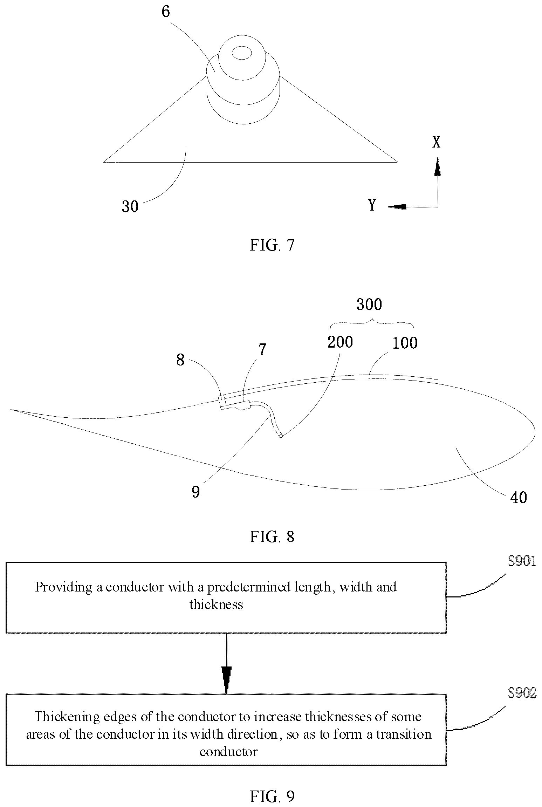

As some optional embodiments, with reference to FIG. 7, the lightning protection device 100 further includes a current collector 6, the current collector 6 is disposed in the through hole 31, and the adapter 30 is connected to the down lead system 200 through the current collector 6.

In order to further converge current, the current collector 6 may be disposed at the through hole 31 of the adapter 30. Optionally, the current collector 6 may be inserted into the through hole 31, or integrally formed with the adapter 30, or connected to the through hole 31 and the adapter 30 through a bolt and a nut.

The current collector 6 is usually of a cylindrical structure and made of a metal material. The current collector 6 has a certain thickness and is thicker than the adapter 30, so the current collector 6 protrudes from the adapter 30. Optionally, the current collector 6 is a metal seat.

The current collector 6 is disposed on the adapter 30, and a wire is connected to the current collector 6, so that the down lead system 200 is connected to the adapter 30, and the current converged to the current collector 6 is transmitted to the down lead system 200 by the wire.

According to the lightning protection device 100 in the embodiments of the present disclosure, the current collector 6 is disposed between the adapter 30 and the down lead system 200, so that the down lead system 200 and the lightning protection device 100 are connected indirectly; the current collector 6 is configured to further improve the current convergence capability, so that the current is converged more efficiently to the end; and the current collector 6 also provides transition protection, so that the protection function of the lightning protection device 100 is further improved.

A lightning protection system 300 provided by embodiments of the present disclosure, which includes the lightning protection device 100 in each embodiment described above and a down lead system 200, has better lightning protection performance and longer service life.

Further, a wind power generator set provided by embodiments of the present disclosure, which includes the lightning protection device 100 or lightning protection system 300 in each embodiment described above, can effectively prevent the blade 40 from being damaged by lightning strikes, and has a higher level of safety and power generation benefits.

With continued reference to FIG. 6 and FIG. 8, as an optional implementation, when the lightning protection system 300 provided by the embodiments of the present disclosure is applied to the wind power generator set and cooperates with the blade 40, the lightning protection device 100 can be pasted to an outer surface of a shell of the blade 40, and a metal connecting structure 7 is pressed onto the adapter 30 in a surface contact state, optionally including a connection of a threaded structure. The metal connecting structure 7 includes an accessory connector 8, and the accessory connector 8 penetrates the shell of the blade 40 and is connected to the down lead system 200 through the down lead 9. One lightning protection device 100 may be disposed on each blade 40, or two or more lightning protection devices 100 may be disposed in some other examples, depending on parameters such as size of the blade 40. A specific quantity is not limited here.

The lightning protection device 100 provided by the embodiments of the present disclosure may alternatively be disposed at a tip of the blade 40. The lightning protection device 100 in which the adapter 30 is disposed can be better connected to the down lead system 200 reliably, thereby improving the reliability of lightning protection grounding. The lightning protection device 100 can reliably conduct 200 KA lightning current, and only a 15 cm wide metal strip needs to be disposed at the tip of the blade 40 to satisfy the lightning protection effect.

With reference to FIG. 9, a forming method for a lightning protection device 100, provided by embodiments of the present disclosure, includes the following steps:
S901, providing a conductor with a predetermined length, width and thickness.
   Optionally, the provided conductor is usually of a conductive plate structure made of a metal plate, such as a copper plate. The length, width and thickness of the conductor are selected as needed. In some other examples, the provided conductor may alternatively be of a metal mesh structure.
S902, thickening edges of the conductor to increase thicknesses of some areas of the conductor in its width direction Y, so as to form a transition conductor 10.

Optionally, the edges of the conductor are thickened, so that the thicknesses of the edges are greater than the thickness of a middle area to achieve a gradual change in thickness in the width direction Y, and the edges on two sides are relatively thick to form the transition conductor 10.

The transition conductor 10 includes a thinned area 11 and an edge area 12, the edge area 12 surrounds at least a portion of the thinned area 11, one side of the edge area 12 and one side of the thinned area 11 in a length direction X of the transition conductor 10 are connected and jointly form a first connecting end 1, a side, opposite to the first connecting end 1, of the transition conductor 10 in the length direction X forms a second connecting end 2, and a thickness of the thinned area 11 is less than that of the edge area 12.

According to the forming method for the lightning protection device 100 in the embodiments of the present disclosure, the edges of the conductor are thickened to form the thinned area 11 and the edge area 12 of the transition conductor 10, so as to adapt to the distribution of current intensity and satisfy the current carrying capacity of each portion.

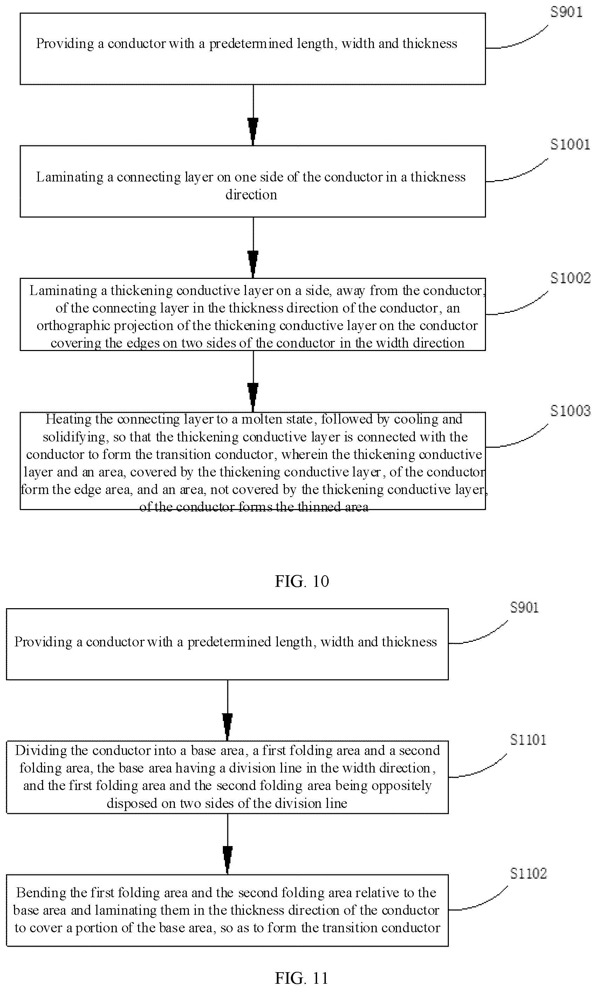

As some optional embodiments, with reference to FIG. 10, the step of thickening edges of the conductor to form a transition conductor 10 includes:
S1001, laminating a connecting layer on one side of the conductor in a thickness direction. Optionally, the connecting layer may be laid on the conductor. Optionally, the connecting layer may be a tin foil.
S1002, laminating a thickening conductive layer on a side, away from the conductor, of the connecting layer in the thickness direction of the conductor, an orthographic projection of the thickening conductive layer on the conductor covering the edges on two sides of the conductor in the width direction Y.
   Optionally, the thickening conductive layer is laid on the connecting layer, the connecting layer is disposed between two conductor layers, the thickening conductive layer needs to cover the edges of two sides of the lower conductor layer, and the thickening conductive layer and the conductor layer are made of the same material.
S1003, heating the connecting layer to a molten state, followed by cooling and solidifying, so that the thickening conductive layer is connected with the conductor to form the transition conductor 10, wherein the thickening conductive layer and an area, covered by the thickening conductive layer, of the conductor form the edge area 12, and an area, not covered by the thickening conductive layer, of the conductor forms the thinned area 11.

Optionally, the middle connecting layer is melted by high temperature to fill a gap between the two conductors. After the connecting layer is cooled and solidified, the two conductors are connected together. The thickened portion at the edges forms the edge area 12, and the non-thickened portion forms the thinned area 11.

According to the forming method for the lightning protection device 100 in the embodiments of the present disclosure, the conductors are tightly connected by pressure welding, which improves the stability of connection and achieves a more reliable connection effect.

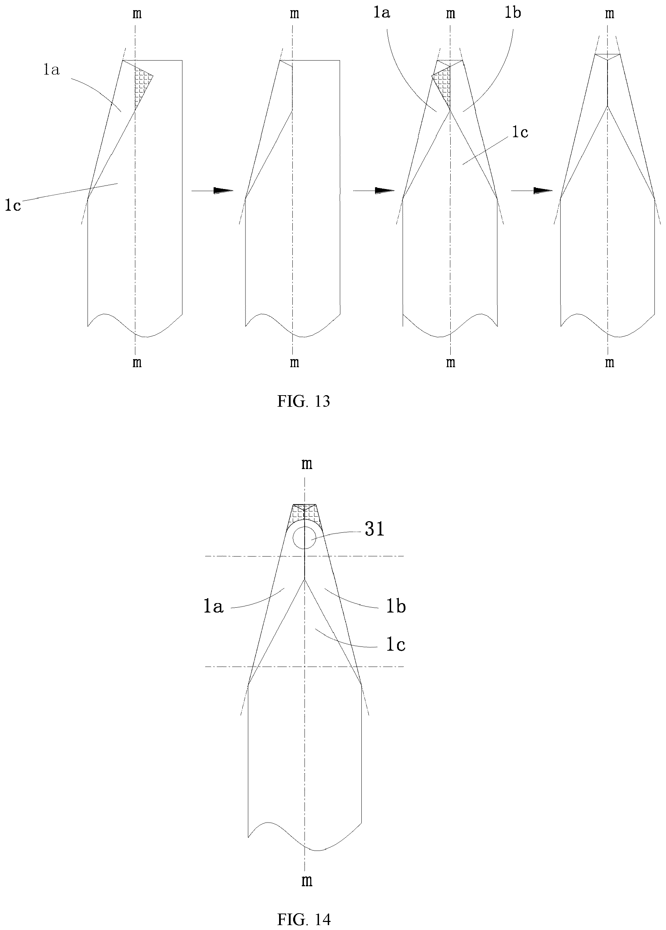

As some optional embodiments, with reference to FIG. 11 and FIG. 13, the step of thickening edges of the conductor to form a transition conductor 10 includes:
S1101, dividing the conductor into a base area 1c, a first folding area 1a and a second folding area 1b, the base area 1c having a division line mm in the width direction Y, and the first folding area 1a and the second folding area 1b being oppositely disposed on two sides of the division line mm.
   Optionally, the conductor needs to be pre-divided into the base area 1c, the first folding area 1a and the second folding area 1b, and the base area 1c has the division line mm.
   Optionally, the division line mm may be a center line, and the first folding area 1a and the second folding area 1b are symmetrically disposed relative to the division line mm.
S1102, bending the first folding area 1a and the second folding area 1b relative to the base area 1c and laminate them in the thickness direction of the conductor to cover a portion of the base area 1c, so as to form the transition conductor 10, wherein a portion, laminated with the base area 1c, of each of the first folding area 1a and the second folding area 1b forms the edge area 12, and a portion, not laminated with the first folding area 1a and the second folding area 1b, of the base area 1c forms the thinned area 11.

Optionally, the first folding area 1a and the second folding area 1b are folded by 180° and laminated on the base area 1c, the laminated portions form the edge area 12, the non-laminated portion forms the thinned area 11, and the entire transition conductor 10 is formed.

It should be noted that the folding shown in the drawings is only an optional embodiment and is not limited to this, and lamination in different folding directions may alternatively be implemented to thicken the edges. The present disclosure does not limit a specific folding way, and various ways of folding for thickening belong to the same invention concept as the above and fall within the scope of protection of the present disclosure.

According to the forming method for the lightning protection device 100 in the embodiments of the present disclosure, the edges of two sides are thickened by folding, so that the number of layers on the edges of two sides is greater than that in the middle area, the operation is convenient and easy, and a variety of structures can be designed more flexibly.

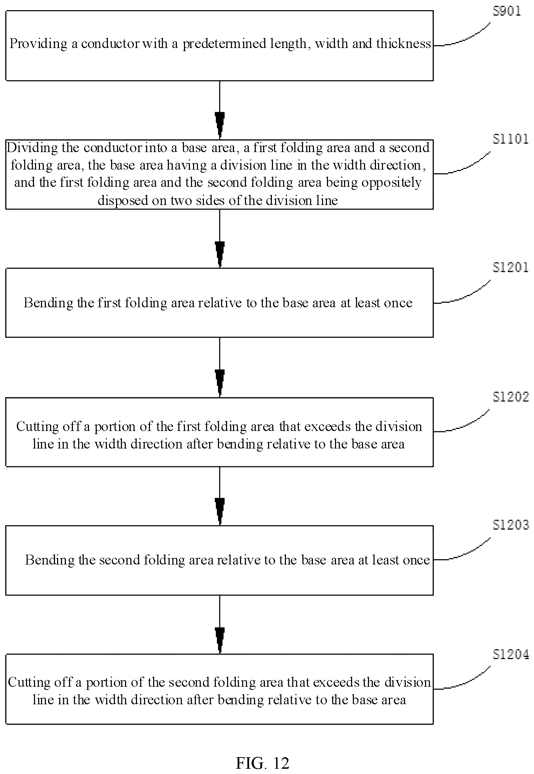

As some optional embodiments, with reference to FIG. 12 and FIG. 13, the step of bending the first folding area 1a and the second folding area 1b relative to the base area 1c and laminating them in the thickness direction to cover a portion of the base area 1c, so as to form the transition conductor 10 includes:
S1201, bending the first folding area 1a relative to the base area 1c at least once.
   Optionally, the number of folds can be adjusted according to an actual thickness requirement. The number of layers in the edge area 12 can be increased by increasing the number of folds. For example, the first folding area 1a is first folded to the laminated base area 1c to form two layers, and then the first folding area 1a is folded by half backwards to form three layers, so as to increase the number of layers.
S1202, cutting off a portion of the first folding area 1a that exceeds the division line mm in the width direction Y after bending relative to the base area 1c.
   Optionally, the portion that exceeds the division line mm is cut off by a cutting tool to avoid overlap of the two folding areas at the division line mm, which can achieve thickness connection.
S1203, bending the second folding area 1b relative to the base area 1c at least once.
   Optionally, the second folding area 1b is folded towards the first folding area 1a to the laminated base area 1c to form two layers, and then the second folding area 1b is folded by half backwards to form three layers, so as to increase the number of layers.
S1204, cutting off a portion of the second folding area 1b that exceeds the division line mm in the width direction Y after bending relative to the base area 1c.

Optionally, the portion that exceeds the division line mm is cut off by a cutting tool to avoid overlap of the two folding areas at the division line mm, which can achieve thickness connection.

Of course, after the first folding area 1a and the second folding area 1b are folded, the portions that exceed the division line mm may not be cut off, and further folding is repeated at the division line mm. For example, when the first folding area 1a and the second folding area 1b are folded once respectively, the portion that does not exceed the division line mm forms two layers, and the two layers are folded at the division line mm to form three layers.

According to the forming method for the lightning protection device 100 in the embodiments of the present disclosure, the number of layers in the edge area 12 is increased by adjusting the number of folds, which can flexibly adjust the thickness of the edge area 12. The thickness can be laminated according to actual needs, with more convenient process and lower material costs.

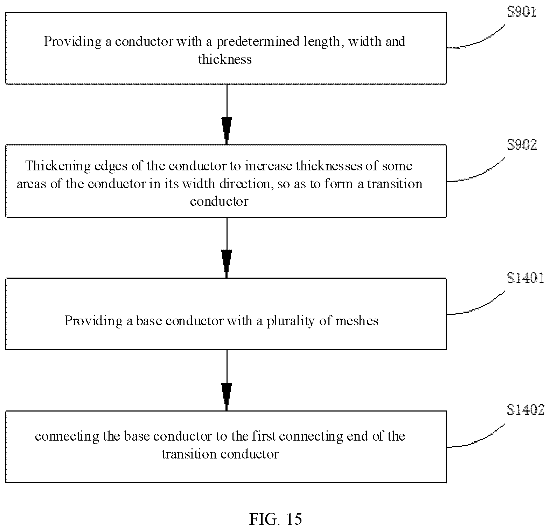

As some optional embodiments, with reference to FIG. 15, the forming method provided by the embodiments of the present disclosure further includes:
S1401, providing a base conductor 20, the base conductor 20 having a plurality of meshes. Optionally, the required base conductor 20 is selected. Optionally, the base conductor 20 has meshes and may be of a metal mesh structure.
S1402, connecting the base conductor 20 to the first connecting end 1 of the transition conductor 10.

Optionally, the base conductor 20 may be connected to the first connecting end 1 of the transition conductor 10 by welding.

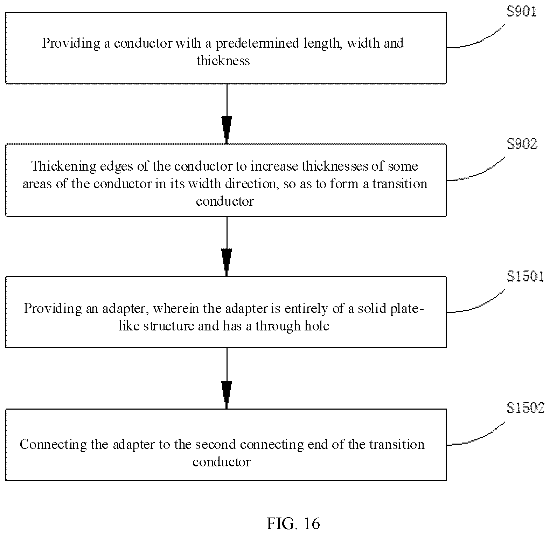

As some optional embodiments, with reference to FIG. 14 and FIG. 16, the forming method provided by the embodiments of the present disclosure further includes:
S1501, providing an adapter 30, wherein the entire adapter 30 is of a solid plate-like structure and has a through hole 31.
   Optionally, the adapter 30 is of a metal plate-like structure with a through hole 31 at its end, and a down lead in the down lead system 200 may be directly connected to the through hole 31.
S 1502, connecting the adapter 30 to the second connecting end 2 of the transition conductor 10.

Optionally, the adapter 30 may be connected to the second connecting end 2 of the transition conductor 10 by welding.

According to the forming method for the lightning protection device 100 in the embodiments of the present disclosure, the adapter 30 and the base conductor 20 are connected to the transition conductor 10 respectively to perfect the overall structure of the lightning protection device 100, which is more conducive to receiving lightning and collecting current and improves overall current export capability.

In summary, according to the lightning protection device 100, the lightning protection system 300, the wind power generator set, and the method provided by the present disclosure, the transition conductor 10 is disposed in the lightning protection device 100, the transition conductor 10 is divided into the thinned area 11 and the edge area 12, and the thickness of the thinned area 11 is less than that of the edge area 12, thereby improving current carrying capacity at edges of the lightning protection device 100, adapting to the distribution law of current during transmission along a plane, avoiding damage to the lightning protection device 100 by excessive concentration of the current at the edges, and improving overall safety performance.

Although the present disclosure is described with reference to the preferred embodiments, various improvements can be made and equivalents can be substituted for components therein without departing from the scope of the present disclosure. In particular, as long as there is no structural conflict, various technical features mentioned in the embodiments may be combined in any manner. The present disclosure is not limited to the specific embodiments disclosed herein, but includes all technical solutions falling within the scope of the claims.

## Claims

1. A lightning protection device, comprising:
a transition conductor with a predetermined length, width and thickness, wherein the transition conductor comprises a first connecting end and a second connecting end opposite to each other in its length direction, the first connecting end is used for receiving lightning current, and the second connecting end is used for connection with a down lead system,
wherein the transition conductor comprises a thinned area and an edge area, the edge area surrounds at least a portion of the thinned area, one side of the edge area and one side of the thinned area in the length direction are connected and jointly form the first connecting end, and a thickness of the thinned area is less than that of the edge area.

2. The lightning protection device according to claim 1, wherein the sides of the thinned area and the edge area in the length direction that form the first connecting end are aligned in a width direction.

3. The lightning protection device according to claim 2, wherein the transition conductor comprises a first edge and a second edge opposite to each other in its width direction, both the first edge and the second edge are located in the edge area, one end of the first edge and one end of the second edge in the length direction are scattered away from each other and connected to the first connecting end respectively, and the other ends of the first edge and the second edge converge towards each other and are connected to the second connecting end respectively.

4. The lightning protection device according to claim 1, wherein the thickness of the edge area increases in the length direction from the first connecting end to the second connecting end.

5. The lightning protection device according to claim 4, wherein the edge area comprises a plurality of conductive segments sequentially disposed in the length direction, and the thicknesses of the plurality of conductive segments increase segment by segment in an extension direction from the first connecting end to the second connecting end.

6. The lightning protection device according to claim 1, wherein the edge area comprises edge portions in pairs, the edge portions in pairs are oppositely disposed on two sides of the thinned area in the width direction of the transition conductor, and the thickness of each edge portion is greater than that of the thinned area.

7. The lightning protection device according to claim 6, wherein the edge portions on the two sides of the thinned area are symmetrically disposed in the width direction.

8. The lightning protection device according to claim 6, wherein in a thickness direction of the transition conductor, orthogonal projections of the thinned area and the edge portions are all triangular;
or in a thickness direction of the transition conductor, orthogonal projections of the thinned area and the edge portions are all rectangular.

9. The lightning protection device according to any one of claims 1 to 8, wherein the lightning protection device further comprises a base conductor connected to the first connecting end.

10. The lightning protection device according to claim 9, wherein the base conductor comprises a plurality of meshes having a same size.

11. The lightning protection device according to claim 1, wherein the lightning protection device further comprises an adapter disposed at the second connecting end, the adapter is entirely of a solid plate-like structure, and the adapter is provided with a through hole and connected to the down lead system through the through hole.

12. The lightning protection device according to claim 11, wherein the lightning protection device further comprises a current collector disposed in the through hole, and the adapter is connected to the down lead system through the current collector.

13. A lightning protection system, comprising:
the lightning protection device according to any one of claims 1 to 12; and
a down lead system directly or indirectly connected to the transition conductor.

14. A wind power generator set, comprising blades, each blade comprising a shell, wherein the wind power generator set further comprises:
the lightning protection system according to claim 13; and
wherein the lightning protection device covers at least a portion of the shell and is connected to the shell.

15. A forming method for a lightning protection device, comprising:
providing a conductor with a predetermined length, width and thickness; and
thickening edges of the conductor to increase thicknesses of some areas of the conductor in its width direction, so as to form a transition conductor,
wherein the transition conductor comprises a thinned area and an edge area, the edge area surrounds at least a portion of the thinned area, one side of the edge area and one side of the thinned area in a length direction of the transition conductor are connected and jointly form a first connecting end, a side, opposite to the first connecting end, of the transition conductor in the length direction forms a second connecting end, and a thickness of the thinned area is less than that of the edge area.

16. The forming method for a lightning protection device according to claim 15, wherein the step of thickening edges of the conductor to form a transition conductor comprises:
laminating a connecting layer on one side of the conductor in a thickness direction;
laminating a thickening conductive layer on a side, away from the conductor, of the connecting layer in the thickness direction of the conductor, an orthographic projection of the thickening conductive layer on the conductor covering the edges on two sides of the conductor in the width direction; and
heating the connecting layer to a molten state, followed by cooling and solidifying, so that the thickening conductive layer is connected with the conductor to form the transition conductor, wherein the thickening conductive layer and an area, covered by the thickening conductive layer, of the conductor form the edge area, and an area, not covered by the thickening conductive layer, of the conductor forms the thinned area.

17. The forming method for a lightning protection device according to claim 15, wherein the step of thickening edges of the conductor to form a transition conductor comprises:
dividing the conductor into a base area, a first folding area and a second folding area, the base area having a division line in the width direction, and the first folding area and the second folding area being oppositely disposed on two sides of the division line; and
bending the first folding area and the second folding area relative to the base area and laminating them in the thickness direction of the conductor to cover a portion of the base area, so as to form the transition conductor, wherein a portion, laminated with the base area, of each of the first folding area and the second folding area forms the edge area, and a portion, not laminated with the first folding area and the second folding area, of the base area forms the thinned area.

18. The forming method for a lightning protection device according to claim 17, wherein the step of bending the first folding area and the second folding area relative to the base area and laminating them in the thickness direction to cover a portion of the base area, so as to form the transition conductor comprises:
bending the first folding area relative to the base area at least once;
cutting off a portion of the first folding area that exceeds the division line in the width direction after bending relative to the base area;
bending the second folding area relative to the base area at least once; and
cutting off a portion of the second folding area that exceeds the division line in the width direction after bending relative to the base area.

19. The forming method for a lightning protection device according to claim 15, further comprising:
providing a base conductor with a plurality of meshes;
connecting the base conductor to the first connecting end of the transition conductor;
and/or
further comprising:
providing an adapter, wherein the adapter is entirely of a solid plate-like structure and has a through hole; and
connecting the adapter to the second connecting end of the transition conductor.
